# EUROPEAN PATENT APPLICATION

(11) **EP 3 144 874 A1**
(43) Date of publication of application: **22.03.2017**
(21) Application number: 15792966.2
(22) Date of filing: 07.05.2015
(51) Int. Cl.: G06Q 50/10, G06F 3/048, G06Q 30/02

(54) **WEARABLE TERMINAL DEVICE, DISPLAY METHOD, PROGRAM, AND SERVICE PROVIDING SYSTEM**

(30) Priority: 13.05.2014 JP 2014100038
(71) Applicant: Japan Mode Co. Ltd., Tokyo 105-0022 (JP)
(72) Inventor: KAWASE, Taro, Tokyo 105-0022 (JP); KAWASE, Ryuji, Tokyo 105-0022 (JP)
(74) Representative: Klingseisen, Franz
(86) International application number: PCT/JP2015/002332
(87) International publication number: WO 2015/174046

(57) **Abstract**

A wearable terminal device includes: a display located at a position visible by a user during use; a detection unit configured to detect a predetermined motion or operation made or performed by the user wanting to enjoy a predetermined service; and a control unit configured to display, on the display, information for identifying a provider capable of providing the predetermined service among providers displayed on the display in response to the detection of the detection unit.

## Description

### Technical Field

The present invention relates to a wearable terminal device, a display method, a program, and a service providing system.

### Background Art

Wearable terminal devices such as Google Glass (registered trademark) are known devices with which one can use functions of a computer and the Internet anytime and anywhere without sitting in front of a personal computer (PC) or staring at a smart phone, for example.

### Citation List

### Non Patent Literature

Non Patent Literature 1: Yoichi Yamashita, "Google Glass experiences," [online], January 20, 2014, Mynavi Corporation, [Searched on April 10, 2014], Internet <URL:http://news.mynavi.jp/column/gglass/001/, http://news.mynavi.jp/column/gglass/002/, http://news.mynavi.jp/column/gglass/003/>

### Summary of Invention

### Technical Problem

Manufacturers have commenced sales of products of such wearable terminal devices but are still seeking for the uses of the products.

For example, Non Patent Literature 1 mentions that "it would be interesting if the devices could be introduced into guides in museums or used for checking data of players while watching baseball games, for example," but such uses have not reached a practical level.

Wearable devices also have issues of privacy invasion. In order to expand use of wearable terminal devices, building a culture where wearable terminal devices are accepted in society is also important in addition to technical challenges.

In recent years, the number of foreign travelers visiting Japan is soaring every year, and more than ten million people from foreign countries visited Japan in 2013. In particular, the Olympics are determined to be hosted by Tokyo in 2020, and a large number of people from foreign countries are expected to enter Japan to watch the Olympic Games. It is convenient for foreign people to enjoy services they want to use by using wearable terminal devices. Note that this also applies to a variety of cases other than the Olympics.

One aspect of the present invention is directed to identify a provider capable of providing information requested by a user without invading other privacy matters.

### Solution to Problem

In view of the above, a wearable terminal device of the present disclosure is provided. The wearable terminal device includes: a display located at a position visible by a user during use; a detection unit configured to detect a predetermined motion or operation made or performed by the user wanting to enjoy a predetermined service; and a display unit configured to display, on the display, information for identifying a provider capable of providing the predetermined service among providers displayed on the display in response to the detection of the detection unit.

### Advantageous Effects of Invention

In one embodiment, a provider capable of providing information requested by a user is identified without invasion of other privacy matters.

### Brief Description of Drawings

Fig. 1, is a diagram illustrating a service providing system according to an embodiment.
Fig. 2 is a diagram explaining an external appearance of a wearable terminal device.
Fig. 3 is a diagram illustrating an example of a menu screen.
Fig. 4 is a diagram explaining a hardware configuration of a wearable terminal device according to an embodiment.
Fig. 5 is a diagram explaining a hardware configuration of a server device according to an embodiment.
Fig. 6 is a block diagram illustrating functions of a wearable terminal device according to an embodiment.
Fig. 7 is a block diagram illustrating functions of a terminal device according to an embodiment.
Fig. 8 is a block diagram illustrating functions of a server device according to an embodiment.
Fig. 9 is a table explaining provider information.
Fig. 10 is a table explaining user information.
Fig. 11 is a flowchart explaining an initial setting process of a provider.
Fig. 12 is a flowchart explaining a process of displaying a mark around the face of a provider.
Fig. 13 is a flowchart explaining a process of extracting a provider terminal ID.
Fig. 14 is a diagram illustrating an example of a mark displayed on a display.
Fig. 15 is a chart explaining a process in a case where the service providing system is used in offering a seat.

### Description of Embodiments

A service providing system according to an embodiment will be described in detail below with reference to the drawings.

### <embodiment>

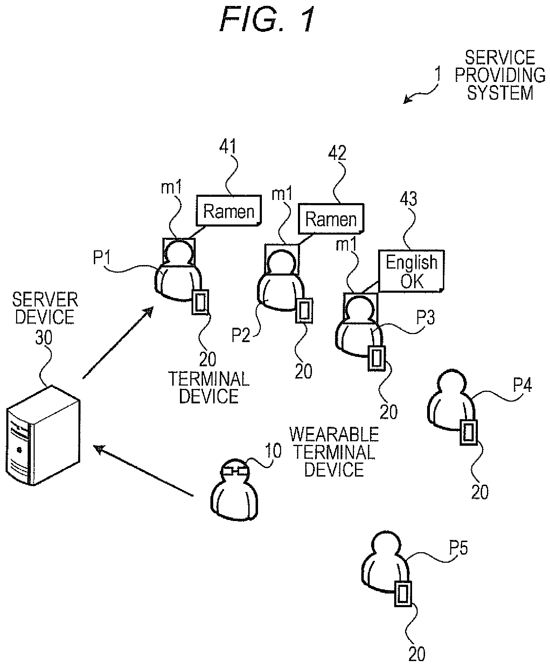

Fig. 1 is a diagram illustrating a service providing system according to an embodiment.

The service providing system 1 of the embodiment is a system used by people from other countries visiting Japan for sightseeing or watching sports (a World Cup or Olympics, for example), for example. Although examples of uses in Japan will be descried in the embodiment, places where the system is applicable are not limited to Japan.

A person from a foreign country (hereinafter referred to as a user) having landed in an airport (or a port) goes to a certain counter provided in the airport. Wearable terminal devices (computers) 10 for languages used by users are provided within the counter. A user presents his/her passport, itinerary or the like to a person at the counter to rent or borrow for free a wearable terminal device 10. At this point, the person at the counter enters the user's information on the passport (user information) into an operation terminal device, so that the user information is stored in a server device 30. In a case where the passport is an IC passport (biometric passport), user information may be retrieved from an IC chip of the IC passport and stored in the server device 30 by an automatic machine. Note that the server device 30 may be located in Japan or elsewhere.

Although an example of a glasses-type wearable terminal device as illustrated in Fig. 1 will be described in the embodiment, the type of the wearable terminal device is not limited thereto and may be a type worn on the arm, for example.

The wearable terminal device 10 has functions of searching for a provider who is capable of providing information or a service requested by the user. The functions of the wearable terminal device 10 will be described in detail below.

The user puts on and activates the wearable terminal device 10, and makes a predetermined motion or performs a predetermined operation to search for a provider capable of providing information or a service requested by the user. Note that a provider registers information that the provider can provide in the server device 30 in advance via a terminal device 20 of the provider. The provider then operates the terminal device 20 to notify the server device 30 that information or a service is in a state ready to be provided (hereinafter also referred to as a standby state). Examples of the terminal device 20 include what is called a smart phone and a tablet terminal.

As illustrated in Fig. 1, for example, when a user wants to search for a person capable of directing the user to a ramen shop or a person capable of serving as an interpreter, the user activates the wearable terminal device 10 and makes a predetermined motion or performs a predetermined operation. As a result, rectangular marks ml, which are visible via a display of the wearable terminal device 10, appear around the faces of a provider P1 and a provider P2 in a state capable of providing information on ramen shops. In addition, "Ramen" indicating that information on ramen shops can be provided is displayed in each of boxes 41 and 42 respectively associated with the marks ml. Furthermore, a mark ml, which is visible via the display of the wearable terminal device 10, also appears around the face of a provider P3 in a state capable of serving as an interpreter. In addition, "English OK" indicating that an interpretation service can be provided is displayed in a box 43 associated with the mark ml.

In contrast, a provider P4 is set to the standby state by operating a terminal device 20, but the information that the provider P4 has registered in the server device 30 is different from those requested by the user. Thus, when the user looks at the display of the wearable terminal device 10, nothing is displayed around the face of the provider P4. Furthermore, a provider P5 has registered that interpretation can be provided in the server device 30, but a terminal device 20 of the provider P5 is not in the standby state. Thus, when the user looks at the display of the wearable terminal device 10, nothing is displayed around the face of the provider P5.

This system 1 enables to readily find a provider capable of providing a service that a user wants without invading others privacy matters. In addition, the user can enjoy a service that the user wants by indicating his/her intention of wanting to receive a service to a provider. Processes of indicating intention and enjoying a service will be described in detail below.

Furthermore, an exchange of points (such as electronic money, points convertible to cash, or points convertible to a product) may take place when a user receives a service.

Furthermore, in a case where a plurality of providers capable of providing a service that a user wants are present, the providers may be displayed on the display in such a manner that a priority level of each of the providers, which is set according to a predetermined rule, can be identified. For example, a more detailed condition (such as (such as sex or age) may be set, and a provider satisfying the detailed condition may be displayed with a green mark ml and a provider not satisfying the detailed condition but being capable of providing a service that a user wants may be displayed with an yellow mark ml. In addition, information such as the name, age, and occupation, of a provider may be displayed in a box.

The service providing system of the present disclosure will now be described in more detail.

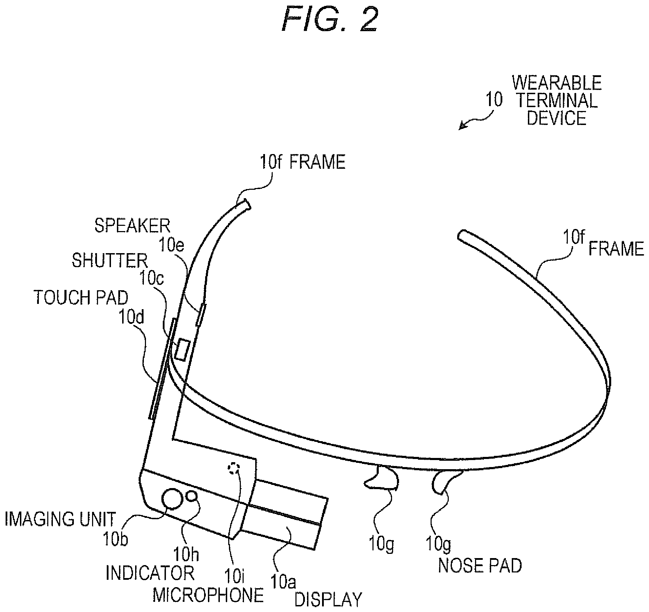

Fig. 2 is a diagram explaining an external appearance of the wearable terminal device.

The wearable terminal device 10 has a display 10a, an imaging unit 10b, a shutter 10c, a touch pad 10d, a speaker 10e, a frame 10f, nose pads 109, an indicator 10h, and a microphone 10i.

For wearing the wearable terminal device 10, a user puts the frame 10f on his/her ears, and places the nose pads 10g on the base of his/her nose.

The display 10a is attached to the frame 10f. The display 10a is located at a position visible by the user during use. The user can obtain information displayed on the display 10a in part of his/her field of view. The display 10a may be see-through.

The imaging unit 10b includes an image sensor such as a charge couple device (CCD) or a complementary metal-oxide semiconductor (CMOS).

The user sees surrounding scenery directly when the display 10a is see-through or via the imaging unit 10b.

The wearable terminal device 10 can be operated by using the touch pad 10d, voice commands and blinking.

When the user utters a voice command, the microphone 10i collects the command. When the user blinks, a sensor included in the display 10a senses the blink.

The indicator 10h lights up or flash while the wearable terminal device 10 is performing a predetermined function (such as an imaging function or a function of searching a provider capable of providing information or a service requested by the user, which will be described below). Thus, others can readily recognize that the user is using the wearable terminal device 10. This reduces invasion of privacy such as a picture of the face of a person being taken or a conversation of people being recorded while the person or the people are unaware, for example.

Note that others can recognize whether or not the display 10a is on or off but cannot figure out what the user is doing.

Although not illustrated in Fig. 2, spectacle lenses may be put into the wearable terminal device 10.

A user wearing the wearable terminal device 10 turns on a main power supply of the wearable terminal device 10 and makes a predetermined motion (swipes on the touch pad 10d). As a result, a menu screen for using the functions of the wearable terminal device 10 is displayed on a side of the display 10a facing the user's face (on a rear face of the display 10a in Fig. 2).

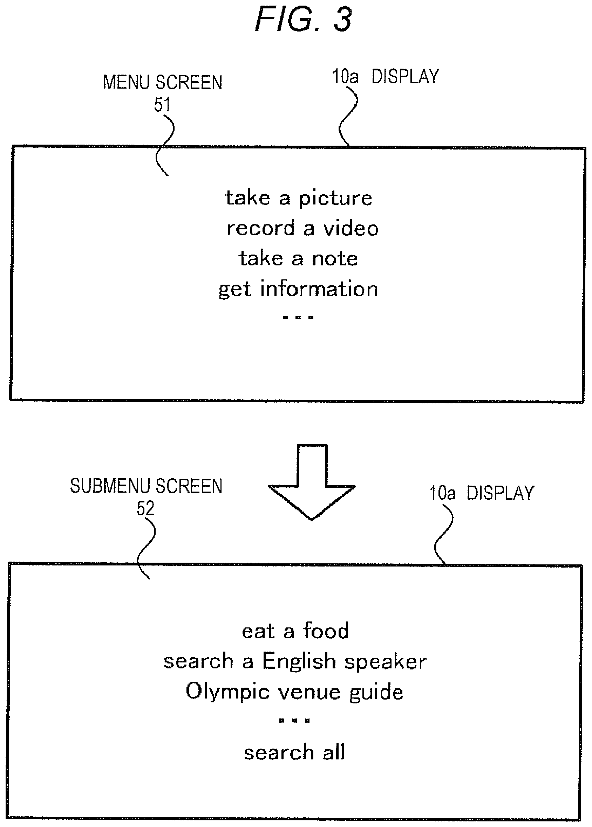

Fig. 3 is a diagram illustrating an example of the menu screen.

A menu screen 51 displayed on the display 10a contains menu items available to the user such as "take a picture," "record a video," "take a note," and "get information." When the user utters a menu item from the menu items displayed on the menu screen 51 and the microphone 10i picks up the voice, the menu item is selected and executed. For example, when the user wants to use a camera function of the imaging unit 10b, the user utters "take a picture," the microphone 10i picks up the voice, and the imaging unit 10b then takes a picture. Note that a shutter sound is output from the speaker 10e when a picture is taken with the imaging unit 10b, for example. In addition, the indicator 10h lights up when a picture is taken with the imaging unit 10b, which makes people therearound be aware of the display 10a being on.

The user can also take a picture by pressing the shutter 10c. A recording period of each video is up to ten seconds, for example.

When the user wants to use a function of getting information explained in Fig. 1 from the menu items displayed on the menu screen 51, for example, the user utters "get information, " the microphone 10i picks up the voice, and the wearable terminal device 10 then displays a submenu screen 52 on the display 10a.

The submenu screen 52 displayed on the display 10a contains all the menu items such as "eat a food, " "search for an English speaker," and "Olympic venue guide" regarding which the user visiting Japan for sightseeing can ask a provider for a solution.

When the user wants to use a function of getting information explained in Fig. 1 from the menu items displayed on the submenu screen 52, the user utters "search for an English speaker, " for example, the microphone 10i picks up the voice, and a rectangle, which is visible via the display 10a, then appears around the face of a provider in a state capable of serving as an interpreter, as explained with reference to Fig. 1. In addition, "English OK" indicating that an interpretation service can be provided is displayed in a box associated with the rectangle.

Note that the user can see information on all the providers who provide any kinds of information via the display 10a by uttering "search all."

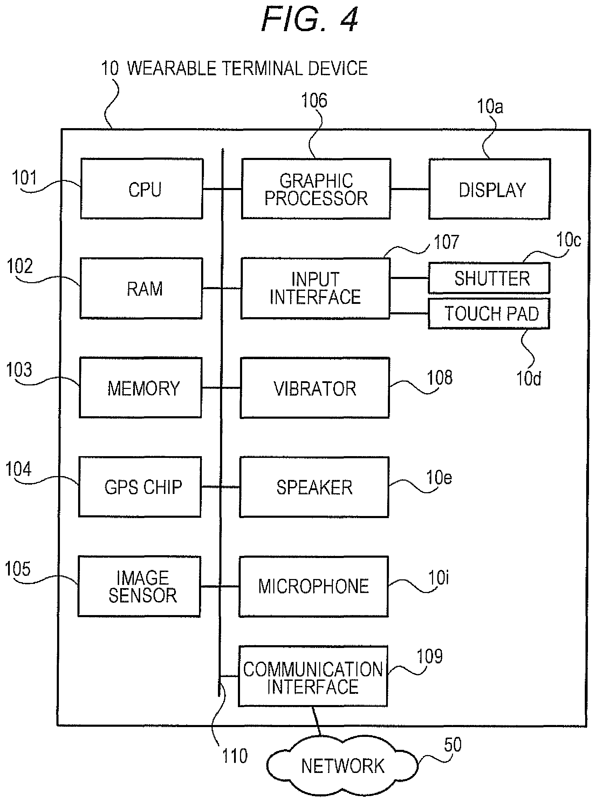

Next, hardware configurations of the wearable terminal device 10, the terminal device 20, and the server device 30 will be described. Fig. 4 is a diagram explaining a hardware configuration of the wearable terminal device according to the embodiment.

The wearable terminal device 10 as a whole is controlled by a central processing unit (CPU) 101. The CPU 101 is connected with a random access memory (RAM) 102 and a plurality of peripheral devices via a bus 110.

The RAM 102 is used as a main storage unit of the wearable terminal device 10. The RAM 102 temporarily stores at least some of programs of an operating system (OS) and application programs to be executed by the CPU 101. The RAM 102 also stores various data to be used in processing performed by the CPU 101.

A memory 103, a GPS chip 104, an image sensor 105, a graphic processor 106, an input interface 107, a vibrator 108, the speaker 10e, the microphone 10i, and a communication interface 109 are connected to the bus 110.

The memory 103 is a semiconductor storage unit such as a flash memory. The memory 103 writes and reads data. The memory 103 stores OS programs, application programs, and various data.

The GPS chip 104 receives radio waves from GPS satellites and calculates a current position (latitude and longitude). The GPS chip 104 sends the calculated current position to the CPU 101.

The image sensor 105 takes a still image or a moving image according to an instruction from the CPU 101. A taken image is stored in the RAM 102 or the memory 103 by the CPU 101.

The display 10a is connected to the graphic processor 106. The graphic processor 105 displays an image on a screen on the display 10a according to an instruction from the CPU 101. Examples of the display 10a include a liquid crystal display device.

The shutter 10c and the touch pad 10d are connected to the input interface 107. The input interface 107 sends a signal from the shutter 10c and the touch pad 10d to the CPU 101.

The vibrator 108 vibrates according to an instruction from the CPU 101.

The communication interface 110 is connected to a network 50. The communication interface 110 transmits and receives data to/ from other computers or communication devices via the network 50. Although an example of direct connection with the network 50 is described in the embodiment, the connection is not limited thereto and the connection to the network 50 may be via another terminal device (by using a tethering function).

The hardware configuration as described above enables implementation of processing functions of the present embodiment. While the hardware configuration of the wearable terminal device 10 is illustrated in Fig. 4, the terminal device 20 can be implemented by a similar hardware configuration.

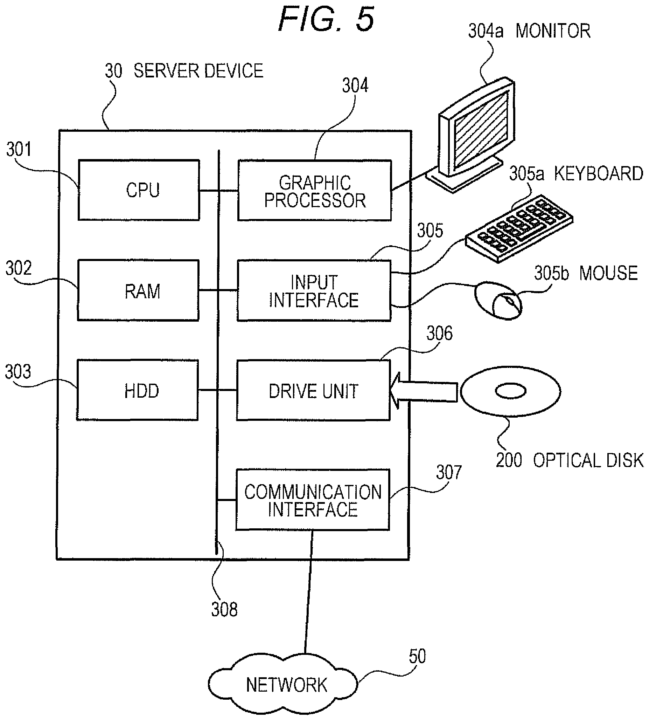

Fig. 5 is a diagram explaining a hardware configuration of the server device according to the embodiment.

The server device 30 as a whole is controlled by a CPU 301. The CPU 301 is connected with a RAM 302 and a plurality of peripheral devices via a bus 308.

The RAM 302 is used as a main storage unit of the server device 30. The RAM 302 temporarily stores at least some of OS programs and application programs to be executed by the CPU 301. The RAM 302 also stores various data to be used in processing performed by the CPU 301.

A hard disk drive (HDD) 303, a graphic processor 304, an input interface 305, a drive unit 306, and a communication interface 307 are connected to the bus 308.

The hard disk drive 303 magnetically writes and reads data into/from an internal disk. The hard disk drive 303 is used as a secondary storage unit of the server device 30. The hard disk drive 303 stores OS programs, application programs, and various data. Note that a semiconductor storage unit such as a flash memory may be used as the secondary storage unit.

A monitor 304a is connected to the graphic processor 304. The graphic processor 304 displays an image on a screen of the monitor 304a according to an instruction from the CPU 301. Examples of the monitor 304a includes a display device having a cathode ray tube (CRT) and a liquid crystal display device.

A keyboard 305a and a mouse 305b are connected to the input interface 305. The input interface 305 sends a signal from the keyboard 305a or the mouse 305b to the CPU 301. Note that the mouse 305b is an example of pointing devices, and other pointing devices may also be used. Examples of other pointing devices include a touch panel, a tablet, a touch pad, and a trackball.

The drive unit 306 reads data recorded on a portable recording medium such as an optical disk, on which data are recorded to be readable by reflection of light, or a universal serial bus (USB) memory. When the drive unit 306 is an optical drive unit, for example, laser light or the like is used to read data recorded on an optical disk 200. Examples of the optical disk 200 include a Blu-ray (registered trademark), a digital versatile disc (DVD), a DVD-RAM, a compact disc read only memory (CD-ROM), and a CD-R (recordable)/RW (rewritable).

The communication interface 307 is connected to the network 50. The communication interface 307 transmits and receives data to/from other computers or communication devices via the network 50.

The hardware configuration as described above enables implementation of processing functions of the present embodiment.

The wearable terminal device 10 having the hardware configuration as illustrated in Fig. 4 is provided with functions as presented below.

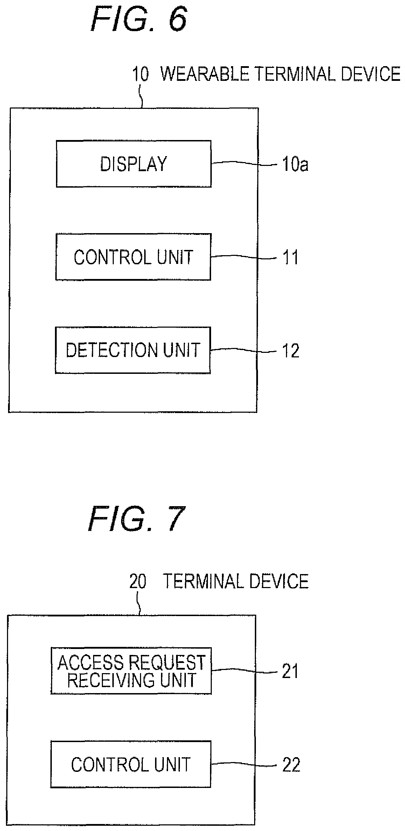

Fig. 6 is a block diagram illustrating the functions of the wearable terminal device according to the embodiment.

The wearable terminal device 10 includes a control unit 11 and a detection unit 12. Note that the control unit 11 and the detection unit 12 can be implemented by the CPU 101.

The control unit 11 controls the whole wearable terminal device 10. For example, the control unit 11 has a face image recognizing function. Specifically, when a face matching with a face image transmitted from the server device 30 is taken by a camera unit 10b and displayed on the display 10a, the control unit 11 displays a mark ml on the face displayed on the display 10a. The control unit 11 also acquires the current position of the wearable terminal device 10 from the GPS chip 104.

The detection unit 12 detects a swipe motion, an utterance, a gesture, or the like made by the user for displaying the menu screen 51 or the submenu screen 52 or performing a menu item displayed on the menu screen 51 or the submenu screen 52. The detection unit 12 sends the detected information to the control unit 11. As a result, the control unit 11 performs processing according to the detected information. For example, for indicating the intention of wanting to receive a service to a provider, the user winks near the provider. When the detection unit 12 detects the wink of the user, the control unit 11 transmits an access request to the terminal device 20 of the provider. The transmission of the access request can be made by radio communication using Bluetooth (registered trademark) or the like, for example.

Fig. 7 is a block diagram illustrating functions of a terminal device according to the embodiment. The terminal device 20 includes an access request receiving unit 21 and a control unit 22. The access request receiving unit 21 receives an access request transmitted by the wearable terminal device 10.

The control unit 22 switches the standby state on and off, changes the type of information the provider wants to provide, and transmits and receives information to/from the wearable terminal device 10 on the basis of an access request received by the access request receiving unit 21.

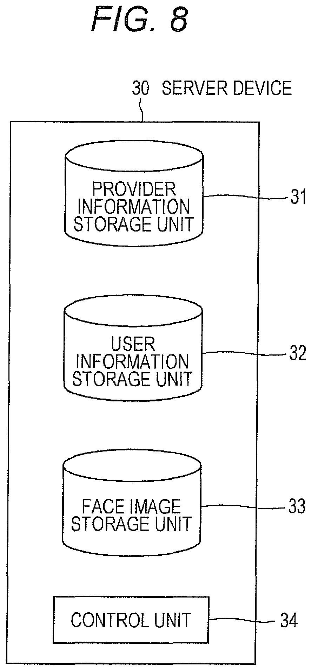

Fig. 8 is a block diagram illustrating functions of the server device according to the embodiment. The server device 30 includes a provider information storage unit 31, a user information storage unit 32, a face image storage unit 33, and a control unit 34.

The provider information storage unit 31 stores provider information. The provider information is information including information on providers input by the providers at initial registration, and points acquired by the providers through provision of information to users, which are associated with each other.

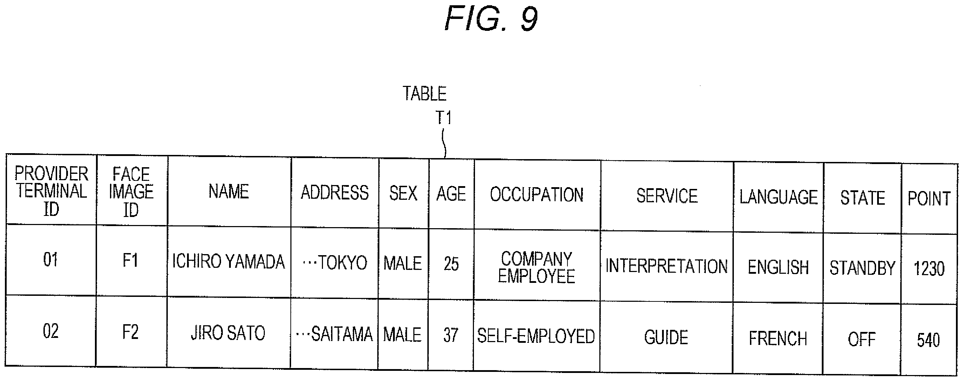

Fig. 9 is a table explaining the provider information.

In the embodiment, the provider information is stored in a form of a table. A table T1 illustrated in Fig. 9 contains fields of provider terminal ID, face image ID, name, address, sex, age, occupation, service, language, state, and point. Information items arranged horizontally are associated with one another.

In the provider terminal ID field, an ID unique to a terminal device assigned to each of the terminal devices 20 of the providers is set.

In the face image ID field, an ID for identifying the face image of a provider is set.

In the name field, the name of a provider input by the provider at initial registration is set.

In the address field, the address of a provider input by the provider at initial registration is set.

In the sex field, the sex of a provider input by the provider at initial registration is set.

In the age field, the age of the provider input by the provider at initial registration is set.

In the occupation field, the occupation of a provider input by the provider at initial registration is set.

In the service field, information (food guide, venue guide, interpretation, etc.) that can be provided by a provider input by the provider at initial registration is set.

In the language field, one or more languages that a provider can support input by the provider at initial registration.

In the state field, information for identifying whether or not a terminal device 20 is in a standby state in which information can be provided is set. Note that the state may be set for each service to be provided.

In the point field, points (a total value) acquired by a provider through provision of information to users.

The description now refers back to Fig. 8.

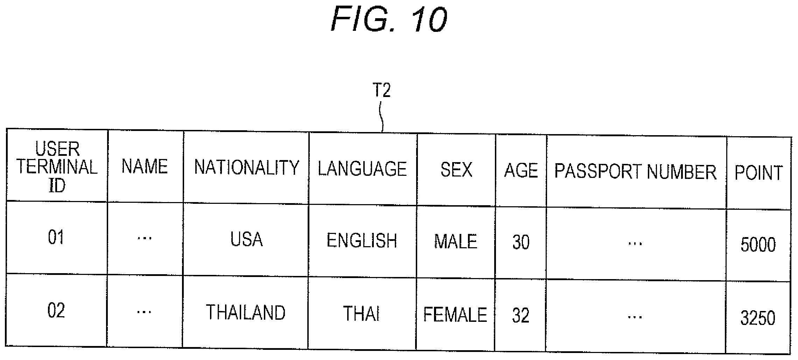

The user information storage unit 32 stores user information. The user information is information including information stated on a passport presented by a user to rent a wearable terminal device 10, and points to be received by a provider through provision of information to the user, which are associated with each other. Fig. 10 is a table explaining the user information.

In the embodiment, the user information is stored in a form of a table. A table T2 illustrated in Fig. 10 contains fields of user terminal ID, name, nationality, language, sex, age, passport number, and point. Information items arranged horizontally are associated with one another.

In the user terminal ID field, an ID unique to a wearable terminal device assigned to each of the wearable terminal devices 10 is set. For example, if a user has lost a wearable terminal device, it is possible to identify which wearable terminal device is lost by referring to the user terminal ID.

In the name field, the name of a user is set.

In the nationality, the nationality of a user is set.

In the language field, one or more languages a user speaks are set.

In the sex field, the sex of a user is set.

In the age, the age of a user is set.

In the passport number field, the passport number of a user is set.

In the point field, points a user has is set. Note that an initial point may be entered at the point when the wearable terminal device 10 is rented, for example. When a point balance has decreased, points can be purchased by credit card payment or the like.

The description now refers back to Fig. 8.

The face image storage unit 33 stores face images of providers in association with face image IDs. Since a provider terminal ID and a face image ID are stored in association with each other in the table T1 as described above, a provider terminal ID and a face image are practically associated with each other.

The control unit 34 transmits information on a provider capable of providing information requested by a user to the wearable terminal device 10 in response to a request for providing information from the wearable terminal device 10. The control unit 33 also manages exchange of points between users and providers performed at provision of information.

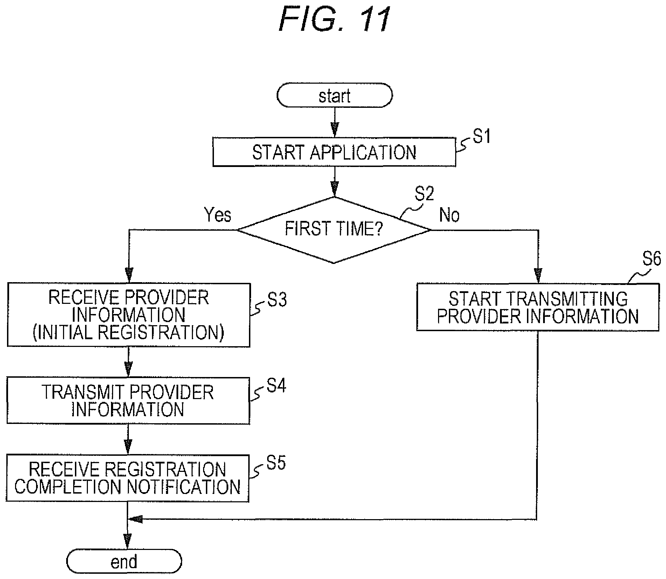

Next, an initial setting process performed by a provider will be described with reference to a flowchart. Fig. 11 is a flowchart explaining the initial setting process of a provider.

Although not illustrated in Fig. 11, before the initial setting process, the provider first operates the terminal device 20 to access a predetermined website via the network 50 and download an application having the information providing function illustrated in Fig. 7.
[Step S1] In response to an operation of the provider, the terminal device 20 starts the application. As a result of start of the application, the control unit 22 starts operating, and the process proceeds to step S2.
[Step S2] The control unit 22 determines whether or not this is the first time the application is started. If this is the first time (Yes in step S2), the process proceeds to step S3. If this is not the first time, that is, if this is the second or subsequent time the application is started (No in step S2), the process proceeds to step S6.
[Step S3] The control unit 22 displays a registration screen on the monitor of the terminal device 20 to receive input of provider information (initial registration) . The control unit 22 also uses an image sensor of the terminal device 20 to receive input of the face image of the provider. After the provider information and the face image are input and a send button is pressed by the provider, the process proceeds to step S4.
[Step S4] The control unit 22 transmits the provider information and the face image in association with the provider terminal ID to the server device 30. Thereafter, the process proceeds to step S5.

The server device 30 stores the received provider information in the table T1. The server device 30 also generates a unique face image ID. The server device 30 then stores the received face image and the generated face image ID in association with the provider terminal ID in the face image storage unit 33. The generated face image ID is also stored in association with the provider terminal ID in the table T1.

[Step S5] Upon receiving a notification that the provider information has been stored in the table T1 from the server device 30, the control unit 22 notifies the provider of the same by using the speaker or the vibrator function. Thereafter, the process illustrated in Fig. 11 is terminated.

[Step S6] The control unit 22 notifies the server device 30 of being in the standby state in association with the provider terminal ID. Thereafter, the process illustrated in Fig. 11 is terminated. As a result, the server device 30 changes the state field of the records of the provider terminal ID received by the table T1 from off to standby. Note that whether or not the state is the standby state may be set for each service to be provided.

Note that the provider can change the content of the provider information stored in the server device 30 at any timing by starting the application.

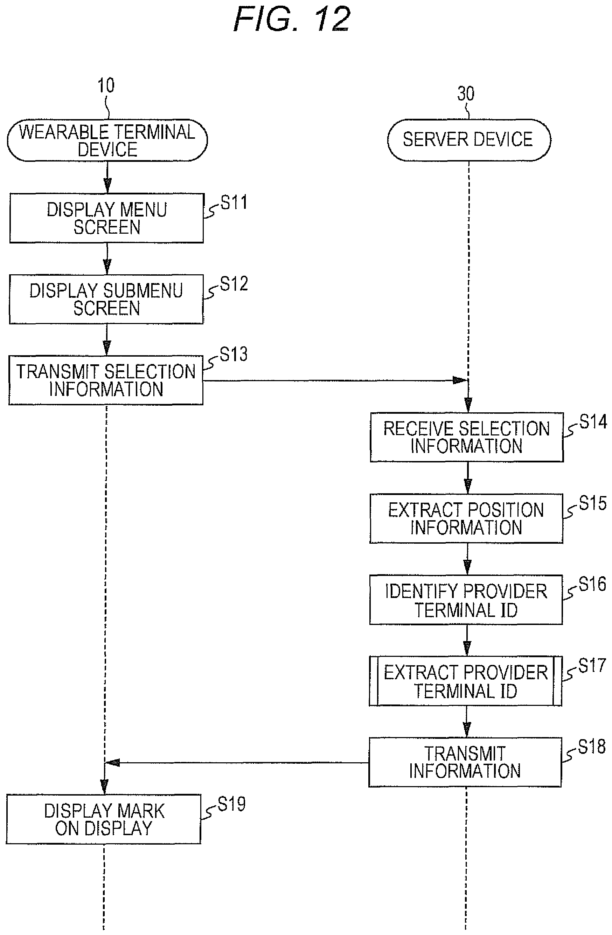

Next, a process of displaying a mark m1, which is visible via the display 10a, around the face of a provider will be described with reference to a flowchart. Fig. 12 is a flowchart explaining the process of displaying a mark around the face of a provider.

[Step S11] In response to a predetermined motion or operation of the user, the control unit 11 displays the menu screen 51 on the display 10a.

[Step S12] When the menu item "get information" is selected by the user, the control unit 11 displays the submenu screen 52 on the display 10a.

[Step S13] When a menu item is selected by the user from the menu items displayed on the submenu screen 52, the control unit 11 transmits selection information to the server device 30. The selection information contains the user terminal ID of the wearable terminal device 10, position information of the wearable terminal device 10, the menu item selected by the user, and the language or languages used by the user. Note that the position information of the wearable terminal device 10 is acquired from the GPS chip 104 by the control unit 11.

[Step S14] After the control unit 34 has received the selection information, the process proceeds to step S15.

[Step S15] The control unit 34 extracts the position information contained in the selection information. Thereafter, the process proceeds to step S16.

[Step S16] The control unit 34 inquires a GPS server device, which is not illustrated, to identify the provider terminal ID of a terminal device 20 located near (for example, within 10 m from) the position information extracted in step S15. Thereafter, the process proceeds to step S17.

[Step S17] The control unit 34 uses the provider terminal ID of the terminal device 20 identified in step S16 and the selection information to extract the provider terminal ID of a provider capable of providing information that the user wants. Thereafter, the process proceeds to step S18. Note that the extraction process will be described in detail below.

[Step S18] The control unit 34 refers to the table T1 to identify the face image ID associated with the provider terminal ID extracted in step S17. The control unit 34 then refers to the face image storage unit 33 to extract the face image associated with the identified face image ID. The control unit 34 then transmits information (hereinafter referred to as extracted information) including the provider terminal ID and the extracted face image, which are associated with the menu item, to the wearable terminal device 10.

[Step S19] Upon receiving the extracted information from the server device 30, the control unit 11 determines whether or not a face matching with the face image contained in the received extracted information has been taken by the camera unit 10b (face authentication). If a face matching the face image has been taken by the camera unit 10b, the control unit 11 displays a mark ml to surround the face displayed on the display 10a. In addition, a text indicating that a service corresponding to the menu item selected by the user can be provided is displayed in a box associated with the mark ml. The explanation of the process illustrated in Fig. 12 is terminated here.

Note that the processing in steps S13 to S19 may be repeated after the processing in step S12 is performed. In this manner, even when the user or the provider has moved, a service provider present near the user after the movement can be identified.

Next, the process of extracting the provider terminal ID in step S17 will be described in detail.

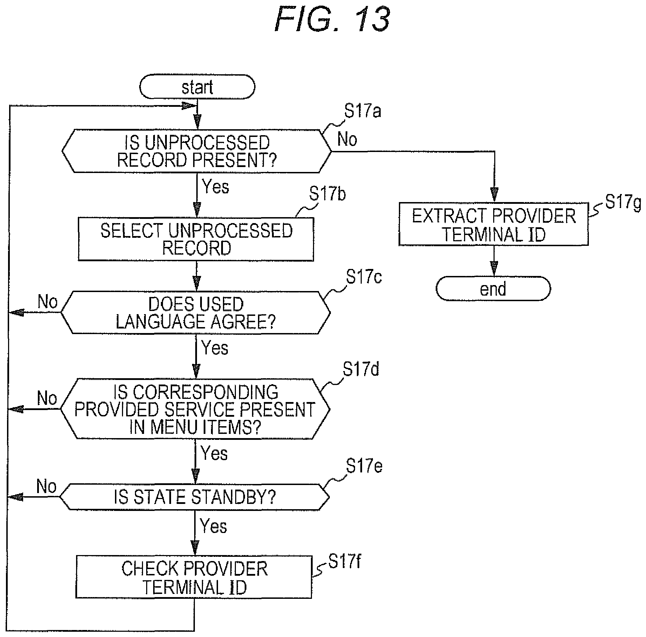

Fig. 13 is a flowchart explaining the process of extracting the provider terminal ID.

[Step S17a] The control unit 34 refers to the table T1 and determines whether or not an unprocessed record (a record on which the processing of steps S17a to S17e has not been performed) is present among the records in the table T1 containing the provider terminal ID of the terminal device 20 identified in step S16. If an unprocessed record is present (Yes in step S17a), the process proceeds to step S17b. If no unprocessed record is present (No in step S17a), the process proceeds to step S17g.

[Step S17b] The control unit 34 selects one unprocessed record. Thereafter, the process proceeds to step S17c.

[Step S17c] The control unit 34 determines whether or not the language set in the language field of the record selected in step S17b agrees with the used language contained in the received selection information. If the language set in the language field agrees with the used language contained in the received selection information (Yes in step S17c), the process proceeds to step S17d. If the language set in the language field does not agree with the used language contained in the received selection information (No in step S17c), the process proceeds to step S17a.

[Step S17d] The control unit 34 determines whether or not the service to be provided set in the service field of the record selected in step S17b corresponds to the menu item contained in the received selection information. For example, if the menu item contained in the selection information is "search for a English speaker, " the service of "interpretation" is determined to correspond thereto, or if the menu item is "venue guide," the service of "guide" is determined to correspond thereto. If the service to be provided set in the service field corresponds to the menu item contained in the received selection information (Yes in step S17d), the process proceeds to step S17e. If the service to be provided set in the service field does not correspond to the menu item contained in the received selection information (No in step S17d), the process proceeds to step S17a.

[Step S17e] The control unit 34 determines whether or not the state set in the state field of the record selected in step S17b is standby. If the state is standby (Yes in step S17e), the process proceeds to step S17f. If the state is not standby (No in step S17e), the process proceeds to step S17a.

[Step S17f] The control unit 34 checks the provider terminal ID of the record. Thereafter, the process proceeds to step S17a.

[Step S17g] The control unit 34 extracts all the provider terminal IDs checked in step S17f. Thereafter, the process illustrated in Fig. 13 is terminated.

Note that the order of the processing in steps S17c to 17e is not limited to that illustrated in Fig. 13. In addition, the method of extracting the provider terminal IDs is not limited to that illustrated in Fig. 13.

### <Application Example 1>

Next, a case where the process illustrated in Fig. 12 is used in offering a seat in a train will be explained.

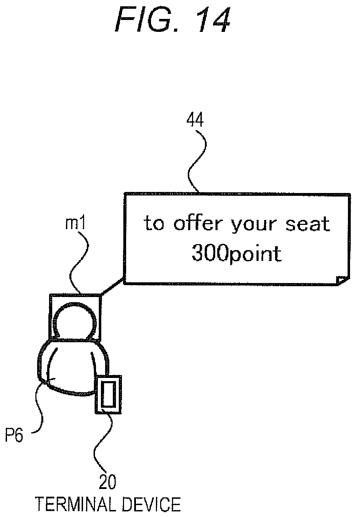

Fig. 14 is a diagram illustrating an example of a mark displayed on the display.

Assume that a menu item "search for a seat" is present in the menu items displayed on the submenu screen 52. When the user utters "search for a seat" and the microphone 10i picks up the voice, the wearable terminal device 10 and the server device 30 perform the process illustrated in Fig. 12. As a result, the control unit 11 displays a mark ml on the display 10a to surround the face of a provider P6 being set to be willing to offer his/her seat and having a terminal device 20 in the standby state. In addition, "to offer your seat" indicating that a seat can be offered and "300 points" to be requested from the user by the provider P6 for offering the seat are displayed in a box 44 associated with the rectangle.

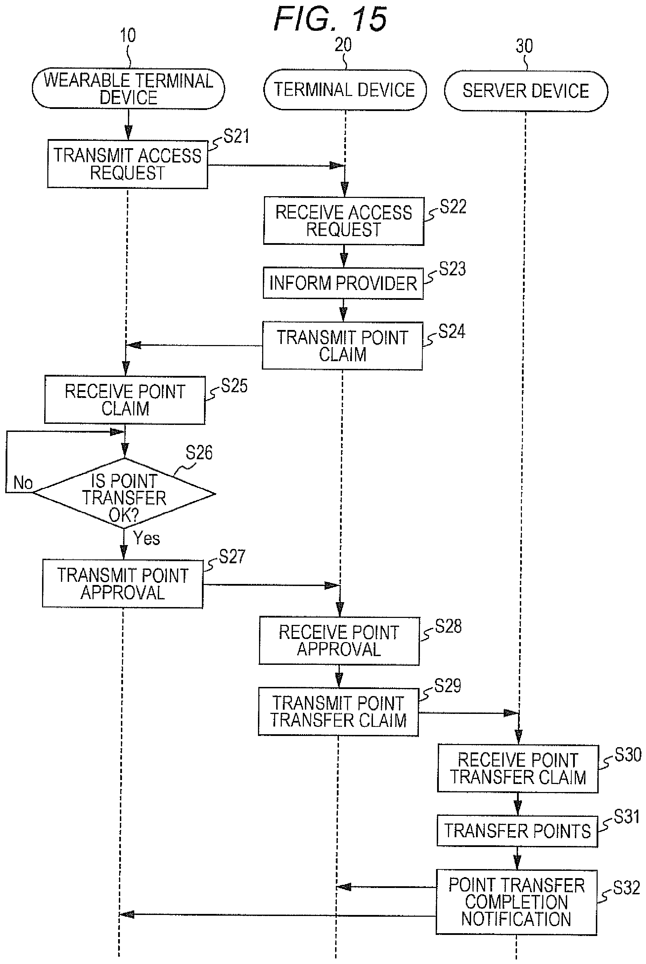

When the user wants the provider P6 to offer his/her seat, the user makes a predetermined motion (wink, for example) in front of the provider P6. Hereinafter, a process after the predetermined motion will be described with reference to the drawing. Fig. 15 is a chart explaining a process in a case where the service providing system is used in offering a seat.

[Step S21] When the detection unit 12 detects the predetermined motion of the user, the control unit 11 transmits an access request to the terminal device 20 of the provider P6. Note that the access request is set to be receivable only by terminal devices 20 of the providers being displayed with the marks ml on the display 10a and being in the standby state. Thus, even when other terminal devices 20 in the standby states are present, the terminal devices 20 of providers providing services that are not displayed on the display 10a of the user (that are not wanted by the user) do not receive the access request.

[Step S22] After the access request receiving unit 21 has received the access request, the process proceeds to step S23.

[Step S23] The control unit 22 informs the provider of the reception of the access request by using a vibrator function, a sound function, or the like. Thereafter, the process proceeds to step S24.

[Step S24] In response to an operation of the provider, the control unit 22 transmits a point claim, which requests transfer of points, to the wearable terminal device 10.

[Step S25] After the control unit 11 has received the point claim, the process proceeds to step S26.

[Step S26] The control unit 11 displays a confirmation screen to confirm whether or not 300 points may be transferred to the provider P6 on the display 10a. The control unit 11 then waits for a predetermined motion (wink, for example) of the user. If the user has made a predetermined motion (Yes in step S26), the control unit 11 determines that the user has approved the point transfer, and the process proceeds to step S27.

[Step S27] The control unit 11 transmits a point approval to the terminal device 20. The point approval contains the user terminal ID of the wearable terminal device 10 and the points (300 points in this specific example) to be transferred.

[Step S28] After the control unit 22 has confirmed reception of the point approval, the process proceeds to step S29. At this point, the control unit 22 may inform the provider of the reception of the point approval by using a vibrator function, a sound function, or the like.

[Step S29] The control unit 22 transmits a point transfer claim to the server device 30. The point transfer claim contains the provider terminal ID of the terminal device 20 of the provider P6, in addition to the user terminal ID of the wearable terminal device 10 and the 300 points to be transferred contained in the point approval received in step S28.

[Step S30] After the control unit 34 has confirmed reception of the point transfer claim, the process proceeds to step S31.

[Step S31] The control unit 34 refers to the table T2, and decreases the points set in the point field of the record having the user terminal ID identical to the user terminal ID contained in the point transfer claim received in step S30 by 300 points. In addition, the control unit 34 refers to the table T2, and increases the points set in the point field of the record having the provider terminal ID identical to the provider terminal ID contained in the point transfer claim received in step S30 by 300 points. Thereafter, the process proceeds to step S32.

[Step S32] The control unit 34 transmits a point transfer completion notification to the wearable terminal device 10 and the terminal device 20.

Note that the timing at which a provider offers a user his/her seat is not particularly limited. For example, the provider may offer the user his/her seat at a point when the reception of the point approval is confirmed in step S28. Alternatively, for example, the provider may offer the user his/her seat at a point when the reception of the point transfer completion notification is confirmed in step S32.

Furthermore, although an example in which points are transferred in offering a seat has been explained in the embodiment, whether or not to transfer points may be optional. For example, an intention of willing to offer a seat for free can be indicated by display of "to offer your seat" alone in the box 44. This can be determined when the provider inputs the provider information.

Furthermore, the service field may be designed to allow addition of various additional conditions. For example, such a condition in which 300 points are requested from a non-handicapped person for offering a seat but no points are requested from a pregnant user, a handicapped user, or a lame user can be displayed in the box 44.

### <Application Example 2>

Next, a case where the process illustrated in Fig. 12 is used in Olympic venue guide will be explained.

A menu item of "Olympic venue guide" is present in the menu items displayed on submenu screen 52. When the user utters "Olympic venue guide" and the microphone 10i picks up the voice, the control unit 11 performs the process illustrated in Fig. 12 to display a mark ml on the display 10a to surround the face of a provider being set, by using the terminal device 20, to be capable of showing the way to the Olympic venue. In addition, "Olympic venue guide" indicating that the provider is capable of showing the way and "100 points" to be requested from the user by the provider for transfer are displayed in a box associated with the mark ml.

When the user wants the provider to show the way, the user makes a predetermined motion (wink, for example) in front of the provider. As a result, the process illustrated in Fig. 14 is started and transfer of points is performed.

The provider then shows the user the way to the Olympic venue at a point when the reception of the point approval is confirmed in step S28, for example. Alternatively, the provider shows the user the way to the Olympic venue at a point when the reception of the point transfer completion notification is confirmed in step S32, for example.

Although not illustrated, in a case where a location such as a venue guide center, for example, where multiple providers capable of showing the way to the Olympic venue are gathered is provided, use of the service providing system 1 enables a provider capable of speaking the user' s language to be readily found.

As described above, the service providing system 1 of the embodiment enables a provider capable of providing a service wanted by a user to be visually found by using the wearable terminal device 10. This increases the possibility that users enjoy services.

For example, there are many Muslims in such a rapidly-growing country as Malaysia. Muslims do not eat pork and worship five times a day in accordance with the Islam's dharma. There are thus demands for guiding restaurants where pork is not served or guiding to a place where they can pray. The service providing system 1 also increases the possibility that these demands are met.

Specifically, the service providing system 1 allows the Japanese to welcome travelers visiting Japan from foreign countries with hospitality and to have healthy attitude to the travelers from foreign countries, so that the travelers will feel that: "It was a good choice to visit Japan. Hope to come again." In this manner, the depth of the heart of individual Japanese can be naturally conveyed. The Japanese have, in particular, a national character that they are embarrassed to talk to a person although they want to welcome the person with hospitality. In the service providing system 1, the use of the wearable terminal device 10 facilitates removal of this barrier of being embarrassed, which is characteristic of the Japanese. In view of the above, the wearable terminal device 10 will be accepted in the society and can promote a basis for creating a new culture.

Note that transfer of points may be set optionally. This allows the service providing system 1, to be used for a commercial purpose or to be used for a non-commercial purpose.

Furthermore, although not described in detail in the embodiment, a user can also be a provider by having both the wearable terminal device 10 and the terminal device 20. This allows to provide a person with a service while enjoying a service from the person (barter exchange of values).

For providing and receiving a service, mutual communication will be needed. In communication, "sharing of visual information" playas a great role. The "point of view" and "instantaneousness" are important with respect to visual information. The service providing system 1 enables a provider capable of providing a service wanted by a user to be visually found by using the wearable terminal device 10 (conversely, providers providing services that the user does not want are not found). Thus, the simultaneousness of the point of view and sympathy of a provider is conveyed more directly and realistically to a receiver.

Although a case where the positions of the wearable terminal device 10 and the terminal device 20 are located by using the GPS has been described, the locating is not limited thereto, and the positions may be located by using a base station of mobile terminal devices, for example.

Furthermore, although an example of a method of identifying a provider through face recognition has been described in the embodiment, the method for identifying a provider is not limited thereto. Furthermore, some of the functions of the server device 30 may be included in the terminal device 20, and some of the functions of the terminal device 20 may be included in the server device 30.

Furthermore, an example in which a person from a foreign country rents the wearable terminal device 10 has been described in the embodiment, a person having a wearable terminal device may download an application having the functions (illustrated in Fig. 6) described above and complete predetermined procedures (a process of storing user information in the table T2).

A wearable terminal device, a display method, a program, and a service providing system according to an aspect of the present invention have been described by way of the illustrated embodiment; the present invention, however, is not limited thereto, and respective components may be replaced with any components having similar functions. Furthermore, any other component or process may be added to the present invention. Furthermore, an aspect of the present invention may be a combination of any two or more components (features) in the above-described embodiment.

Note that the processing functions can be implemented by a computer. In this case, programs describing processes of the functions of the wearable terminal device 10 are provided. The programs are executed by a computer to implement the processing functions on the computer. The programs describing the processes can be recorded on a computer-readable recording medium. Examples of the computer-readable recording medium include a magnetic storage device, an optical disk, a magneto-optical recording medium, and a semiconductor memory. Examples of the magnetic storage device include a hard disk drive, a flexible disk (FD), and a magnetic tape. Examples of the optical disk include a DVD, a DVD-RAM, and a CD-ROM/RW. Examples of the magneto-optical recording medium include a magneto-optical (MO) disk.

For distribution of a program, a portable recording medium such as a DVD or a CD-ROM on which the program is recorded is sold, for example. Alternatively, a program may be stored in a storage unit of a server computer, and the program may be transferred from the server computer to another computer via a network.

A computer that executes a program stores the program recorded on a portable recording medium or the program transferred from a server computer into its own storage unit. The computer then reads the program from its own storage unit and executes processes according to the program. Alternatively, the computer can also read a program directly from a portable recording medium, and execute processes according to the program. Still alternatively, the computer can execute processes according to a received program each time a program is transferred from a server computer connected via a network.

In addition, at least some of the processing functions mentioned above may be implemented by electronic circuits such as a digital signal processor (DSP), an application specific integrated circuit (ASIC), and a programmable logic device (PLD).

### Reference Signs List

- 1: service providing system
- 10: wearable terminal device
- 10a: display
- 11: control unit
- 12: detection unit
- 20: terminal device
- 21: access request receiving unit
- 22: control unit
- 30: server device
- 31: provider information storage unit
- 32: user information storage unit
- 33: face image storage unit
- 34: control unit
- 41: to 44 box
- 51: menu screen
- 52: submenu screen
- ml: mark
- T1, T2: table

## Claims

1. A wearable terminal device comprising:
a display located at a position visible by a user during use;
a detection unit configured to detect a predetermined motion or operation made or performed by the user wanting to enjoy a predetermined service; and
a display unit configured to display, on the display, information for identifying a provider capable of providing the predetermined service among providers displayed on the display in response to the detection of the detection unit.

2. The wearable terminal device according to claim 1, wherein the display unit displays a plurality of menu items regarding which the user can ask for a service on the display in response to the detection of the detection unit, and displays, on the display, information for identifying a provider capable of providing a service regarding a menu item selected by the user.

3. The wearable terminal device according to claim 1 or 2, wherein each of the providers has a terminal device, and the wearable terminal device is configured to receive a face image of a provider having a terminal device present near the wearable terminal device, performs face authentication by using the received face image to identify a provider capable of providing the predetermined service.

4. The wearable terminal device according to any one of claims 1 to 3, further comprising a transmission unit configured to transmit a signal to be received by a terminal device of a provider selected by the user when the detection unit has detected that the user has made or performed a motion or an operation to ask the selected provider for a solution near the selected provider.

5. The wearable terminal device according to any one of claims 1 to 4, wherein the display unit displays detailed information of a provider displayed on the display near the displayed provider.

6. The wearable terminal device according to any one of claims 1 to 5, further comprising an indicator configured to light up or flash in response to the detection of the detection unit.

7. A display method performed by a computer, the display method comprising:
detecting a predetermined motion or operation made or performed by a user wanting to enjoy a predetermined service; and
displaying, on a display located at a position visible by the user during use, information for identifying a provider capable of providing the predetermined service among persons displayed on the display in response to the detection.

8. A program causing a computer to execute processes of:
detecting a predetermined motion or operation made or performed by a user wanting to enjoy a predetermined service; and
displaying, on a display located at a position visible by the user during use, information for identifying a provider capable of providing the predetermined service among persons displayed on the display in response to the detection.

9. A service providing system comprising:
a wearable terminal device including a display located at a position visible by a user during use, a detection unit configured to detect a predetermined motion or operation made or performed by the user wanting to enjoy a predetermined service, and a display unit configured to display, on the display, information for identifying a provider capable of providing the predetermined service among providers displayed on the display in response to the detection of the detection unit; and
a server device including a storage unit configured to store provider information containing a service each of the providers are capable of providing to the user, and a transmitting unit configured to generate information for identifying a provider capable of providing the predetermined service by using the provider information stored in the storage unit on the basis of a request for providing the predetermined service from the wearable terminal device and transmit the generated information to the wearable terminal device.

10. The service providing system according to claim 9, wherein the server device further includes a storage unit configured to store points possessed by users and providers, and
the server device performs a process of transferring predetermined points from points possessed by the user stored in the storage unit to a provider when the provider provides the predetermined service.

11. The service providing system according to claim 9 or 10, wherein
the provider information contains whether or not the providers are in a state capable of providing services, and
the server device generates information for identifying a provider capable of providing the predetermined service by using provider information in a state capable of providing services from the provider information stored in the storage unit on the basis of a request for providing the predetermined service from the wearable terminal device and transmits the generated information to the wearable terminal device.

12. The service providing system according to any one of claims 9 to 11, wherein the wearable terminal device downloads an application at any timing to implement functions of the detection unit and the display unit.

13. The service providing system according to any one of claims 9 to 12, wherein
each of the providers has a terminal device,
the server device further includes a storage unit configured to store a face image of each of the providers substantially in association with identification information of the terminal device,
the server device transmits a face image of a provider having a terminal device present near the wearable terminal device to the wearable terminal device, and
the wearable terminal device performs face authentication by using the received face image to identify a provider capable of providing the predetermined service.
